# EUROPÄISCHE PATENTSCHRIFT

(11) **EP 2 138 069 B1**
(45) Veröffentlichungstag und Bekanntmachung des Hinweises auf die Patenterteilung: **13.10.2010**
(21) Anmeldenummer: 09007647.2
(22) Anmeldetag: 10.06.2009
(51) Int. Cl.: F16B 12/52, A47B 13/06, A47B 9/14

(54) **Bausatz zur Erzeugung eines Mehrfunktionen-Schreib- oder -Arbeitstisches**
Component for manufacturing a multi-function writing or work desk
Kit de production d'une table multifonctionnelle d'écriture ou de travail

(30) Priorität: 19.06.2008 DE 202008008239 U
(43) Veröffentlichungstag der Anmeldung: 30.12.2009
(73) Patentinhaber: Sedus Systems GmbH, 59590 Geseke (DE)
(72) Erfinder: Schiermeier, Horst, 33102 Paderborn (DE); Wibbeke, Alfred, 59590 Geseke (DE)
(74) Vertreter: Meinke, Dabringhaus und Partner GbR

(56) Entgegenhaltungen:
- EP-A- 1 050 244
- GB-A- 1 441 547
- GB-A- 2 129 903
- US-A- 3 420 484

## Beschreibung

Die Erfindung richtet sich auf einen Bausatz zur Erzeugung eines Mehrfunktionen-Schreib- oder -Arbeitstisches der im Oberbegriff des Anspruches 1 angegebenen Gattung.

Derartige Bausätze sind in sehr unterschiedlichen Gestaltungen bekannt. Um hier nur einige zu nennen, sei das Gebrauchsmuster DE 20 2004 015 734 U oder 20 2006 016 372 U der Anmelderin genannt.

Wesentlich bei den bekannten Lösungen ist, dass die die Füße aufnehmenden Bauteile nicht nur diese Funktion ausüben und die Funktion der Fixierung einer Tischplatte, sondern auch zusätzliche Funktionen auszuüben in der Lage sind.

Aufgabe der vorliegenden Erfindung ist die Bereitstellung eines Bausatzes, der neben den oben erwähnten Eigenschaften sich durch konstruktiv einfache Elemente auszeichnet, die eine besondere Vielfältigkeit in der Nutzung bieten bei einfacher Montagemöglichkeit und großer Erweiterungsfähigkeit eines damit hergestellten Tischsystemes.

Mit einem Bausatz der eingangs bezeichneten Art wird diese Aufgabe dadurch gelöst, dass die Traversen als Hohlprofile ausgebildet sind mit einer ersten Profilfläche zur Fixierung an der Unterseite der Tischplatte, einer zweiten dazu etwas senkrecht laufenden kürzeren Profilfläche, die in eine dritte, zur ersten Profilfläche parallelen kürzeren Profilfläche übergeht, einer vierten im stumpfen Winkel davon abgehenden Schrägfläche, die in eine fünfte kurze, zur zweiten Profilfläche parallelen Profilfläche mündet, die ihrerseits in die erste Profilfläche mündet.

Mit der erfindungsgemäßen Gestaltung des Profiles wird zum einen eine große Stabilität erreicht, gleichzeitig ergibt sich optisch ein sehr schmales Profil, da die dem Betrachter zugewandte fünfte Profilfläche sehr schmal gestaltet werden kann. Ein mehrteiliges Unterschraubprofil ist in der US 2 943 898 A dargestellt

Eine Ausgestaltung der Erfindung besteht darin, dass der Übergang der fünften Profilfläche zur ersten Profilfläche als rückgekröpfte Winkelfläche ausgebildet ist. Mit dieser Rückkröpfung wird zum einen unter der Tischplatte eine Art Schattenfuge erzeugt, gleichzeitig bietet der so gestaltete Rücksprung eine Eingriffsmöglichkeit für Stege an Fixierungselementen, die am Profil festgeklemmt werden können und zur Befestigung weiterer Elemente am Tisch dienen können, etwa Halter für Computerbildschirme, Halter für Lampenfüße, Halter für Telefonständer oder Halter für Abschirmwände gegenüber anderen Tischen u. dgl. mehr.

Diesem Zweck dient auch eine weitere Ausgestaltung der Erfindung, die darin besteht, dass die zweite Profilfläche unter Bildung parallel zur ersten und dritten Fläche ausgerichteten Umkröpfungen in das Profilinnere zurückversetzt ausgebildet ist. Durch die dritte rückversetzte Profilfläche wird zum einen eine sehr hohe Stabilität des Profiles gewährleistet, gleichzeitig bilden die Umkröpfungen zusammen mit der Profilfläche eine optimale Führung für anzubringende Zusatzelemente, etwa von Fixiereckelementen für die Tischbeine, für Verlängerungselemente od. dgl.

Zum Eingriff von Steg- oder Hakenflächen an Montageelementen kann, wie dies die Erfindung ebenfalls vorsieht, die rückgekröpfte Profilfläche wenigstens teilweise mit Schlitzen, insbesondere mit zwei parallelen Reihen von Schlitzen, zum Eingriff von Montagestegen von Zusatzelementen ausgerüstet sein.

Auch die parallel zur Tischfläche und in der Gebrauchslage an der Unterseite der Tischplatte anliegende erste und dazu parallele dritte Profilfläche kann erfindungsgemäß mit Durchtrittsöffnungen ausgerüstet sein. Dies dient insbesondere der Möglichkeit, Fixierschrauben anzubringen, ohne dass die Erfindung auf diese Nutzungsmöglichkeit der Durchtrittsöffnungen beschränkt wäre.

Die Erfindung sieht auch Montageecken für die Tischbeine vor, die mit Eingriffsstutzen in das Innere der die Quer- und Längstraversen bildenden Profile an deren freien Enden ausgerüstet sind, wobei derartige Montageecken in unterschiedlichen Gestaltungen im Stand der Technik vorbeschrieben sind. Die vorliegende Erfindung bietet mit der Gestaltung der Montagewinkel die Möglichkeit, diese, falls gewünscht, entsprechend optisch hervorzuheben, um dem so erzeugten Tisch eine zusätzliche Gestaltung aufzuprägen. Eine Tischbeineckverbindung zeigt beispielsweise die US 3 964 404 A.

Erfindungsgemäß kann vorgesehen sein, dass die Montageeckwinkel für die Tischbeine mit Eingriffsstutzen in das Innere der die Quer- und Längstraversen bildenden Profile an deren freien Enden ausgerüstet sind.

Darüber hinaus kann erfindungsgemäß eine querschnittlich U-förmige, in Aufsicht etwa trapezförmige Fixierklammer vorgesehen sein zum Zusammenwirken mit dem Montageecken insbesondere zum Durchtritt einer Montageschraube od. dgl. zur Fixierung eines Tischbeines nach Durchtritt durch die Montageecken.

Schließlich sieht die Erfindung auch vor, dass der querschnittlich etwa U-förmige Montagewinkel mit der Durchtrittsbohrung im U-Steg für die Montageschraube mit nach außen weisenden Eingriffslaschen an den Rändern der U-Schenkel zum Eingriff in die Ausnehmungen in der zweiten rückgekröpften Profilwand ausgerüstet ist.

Weitere Einzelheiten, Merkmale und Vorteile der Erfindung ergeben sich aufgrund der nachfolgenden Beschreibung sowie anhand der Zeichnung. Diese zeigt in
- Fig. 1: die räumliche Darstellung eines Tisches nach der Erfindung,
- Fig. 2: die räumliche Unteransicht eines Tisches nach der Erfindung,
- Fig. 3: eine räumliche Detailansicht in Unteransicht einer Tischecke,
- Fig. 4: die gleiche Darstellung wie in Fig. 3 mit zusätzlichem Klemmelement,
- Fig. 5: eine Tischecke in Unteransicht mit Montage- ecken und zwei querschnittlich unterschied- lichen Tischbeinen,
- Fig. 6 bis 8: in Unteransicht zwei Tischbereiche in unter- schiedlichen Montagezuständen sowie in
- Fig. 9: Seiten-Detailansicht der Kopplung zweier Tischplatten.

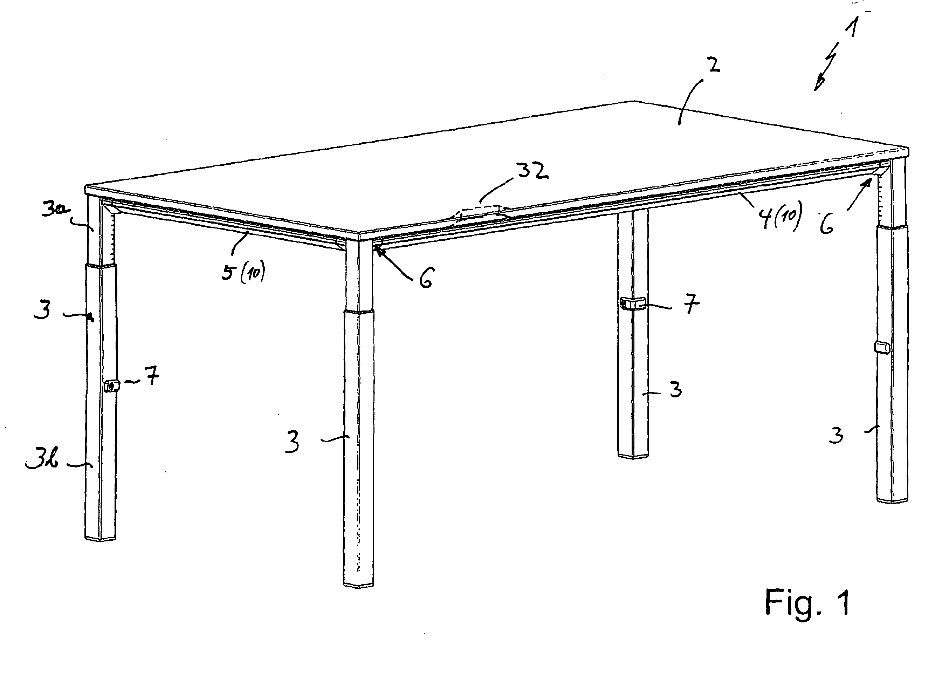

Der erfindungsgemäße Bausatz dient zur Erzeugung eines Mehrfunktionen-Schreibtisches, allgemein mit 1 bezeichnet, dessen wesentliche Elemente in einer Tischplatte 2, vier Tischbeine 3 in der einfachsten Ausgestaltung, wie sie in Fig. 1 dargestellt ist, sowie aus unter der Tischplatte 2 montierten Längstraversen 4 und Quertraversen 5 bestehen, wobei zur Montage der Tischplatte 2 an den Traversenenden Montageecken, allgemein mit 6 bezeichnet, vorgesehen sind.

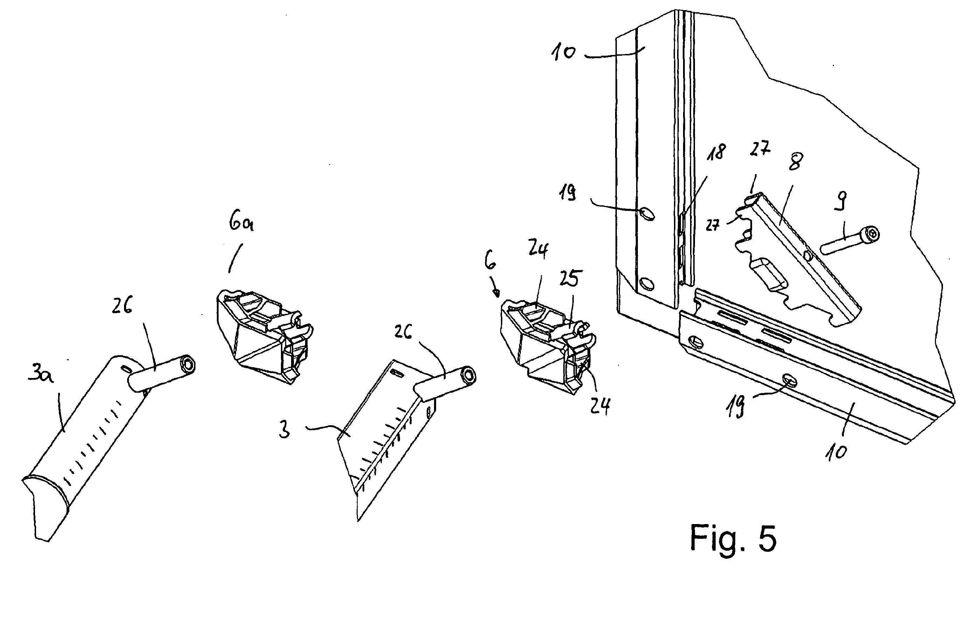

Wie sich aus Fig. 1 ergibt, können die Tischbeine 3 höhenverstellbar sein. Dabei taucht ein in der Montageecke 6 befestigtes Beinelement 3a in ein Hülsenelement 3b ein, wobei die beiden Elemente über eine Stellschraube 7 aneinander fixierbar sind. Hierauf kommt es aber ebenso wenig an, wie auf die Querschnittsformen der Tischbeine 3. Diese können neben der in Fig. 1 dargestellten eckigen Form auch eine runde Form aufweisen, wie sich dies z.B. aus Fig. 5 ergibt, sie können aber auch elliptisch sein oder Mischformen haben.

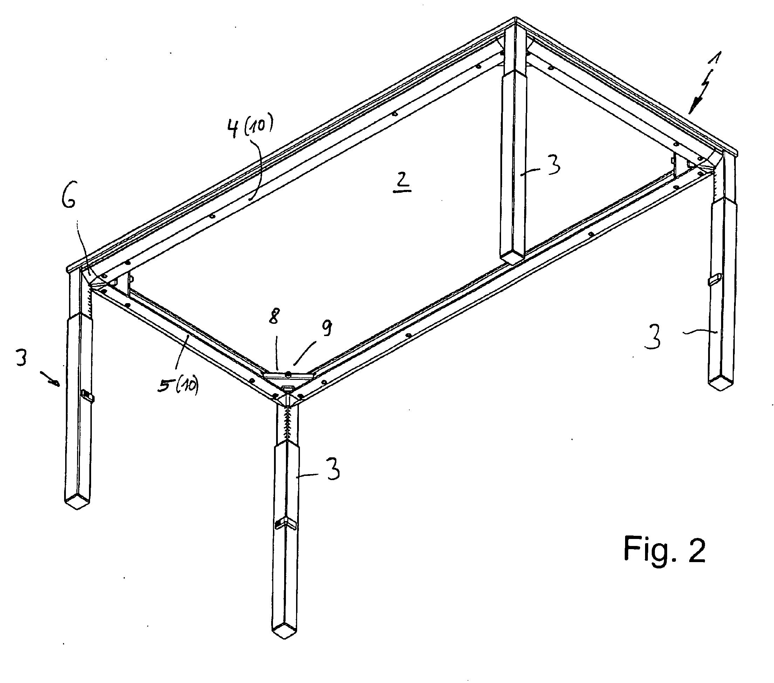

Wie sich aus der Unteransicht der Fig. 2 unter die Tischplatte 2 ergibt, werden die Tischbeine 3 mittels in Aufsicht trapezförmigen Fixierklammern 8 mit Hilfe von Spannschrauben 9 befestigt, deren genaue Positionierung weiter unten näher beschrieben ist.

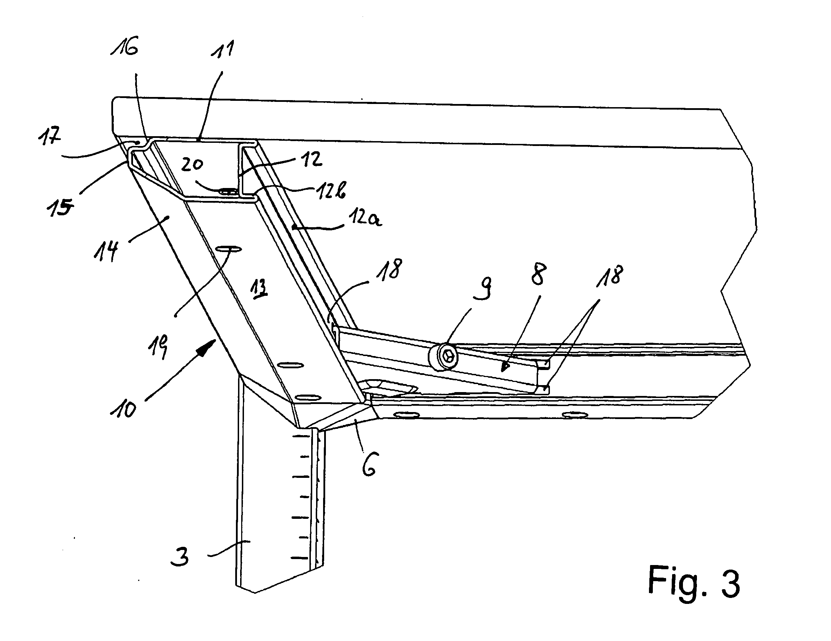

Ein wesentliches Element des erfindungsgemäßen Bausatzes stellt das Profil dar, aus dem die Quer- und Längstraversen 4 und 5 gebildet sind. Dieses Profil ist im Querschnitt vergrößert in Fig. 3 dargestellt und allgemein mit der Bezugsziffer 10 bezeichnet.

Dieses Profil 10 setzt sich aus unterschiedlichen Profilflächen zusammen, wobei eine erste Profilfläche 11 vorgesehen ist, die sich in der Gebrauchslage an die Unterseite der Tischplatte 2 anlegt. An diese Profilfläche 11 schließt sich im rechten Winkel eine zweite kürzere Profilfläche 12 an, die in eine dritte Profilfläche 13 übergeht, die wiederum parallel zur ersten Profilfläche 11 ausgerüstet ist. Die vierte Profilfläche 14 verläuft in einem stumpfen Winkel von der Profilfläche 13 in eine zur zweiten Profilfläche 12 parallele, kürzere Profilfläche 15 ein, die ihrerseits über eine rückgekröpfte Winkelfläche 16 in die erste Profilfläche 11 übergeht. Durch die rückgekröpfte Winkelfläche 16 bildet sich unterhalb der Tischplatte 2 eine Art Schattenfuge 17, die auch zur Aufnahme von Stegen an Klemmelementen od. dgl. einsetzbar ist.

Ein wesentliches Gestaltungsmerkmal des Hohlprofiles 10 besteht darin, dass die zweite Profilfläche 12, die zur ersten senkrecht ausgebildet ist, ihrerseits in das Profilinnere zurückversetzt ist, so dass sich zwei Umkröpfungen 12a und 12b ergeben, die einen Kanal bilden, in den Elemente eingreifen können bei gleichzeitiger Sicherung und Führung dieser Elemente.

Um Fixierungen zu ermöglichen, ist die Fläche 12 mit Schlitzen 18, im dargestellten Beispiel der Fig. 5 mit zwei parallelen Reihen von Schlitzen 18, ausgerüstet, in die Stege od. dgl. von Fixierklammern 8 eingreifen können, wie sich dies beispielsweise aus Fig. 3 ergibt. Die Fixierschraube 9 durchsetzt die Fixierklammer 8 und greift nach Durchtritt des Eckwinkels im Gewinde an dem jeweiligen Tischbein 3 ein, wie dies weiter unten zu Fig. 5 näher beschrieben ist.

Im Profil 10 können auch weitere Durchgangsbohrungen 19 bzw. 20 vorgesehen sein, die z.B. zum Durchtritt von Befestigungsschrauben dienen bzw. der Werkzeuge, die diese Schrauben betätigen.

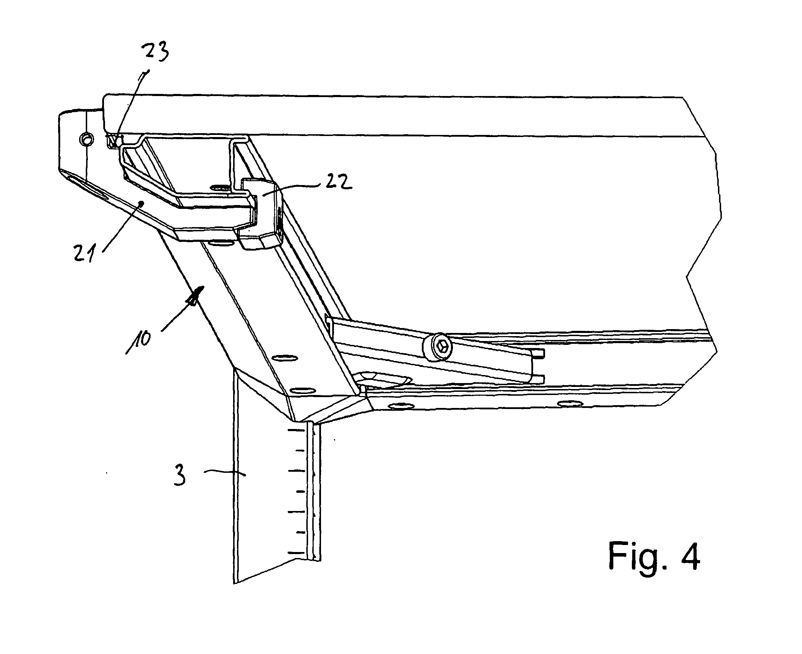

In Fig. 4 ist lediglich beispielsweise angedeutet, dass am Traversenprofil 10 Spannelemente 21 befestigbar sind, wobei ein Spannkopf 22 in die Rinne eingreift, die von der Profilwand 12 und den Umkröpfungen 12a und 12b gebildet wird, wie sich dies aus Fig. 4 ergibt und die zur Befestigung von Zusatzelementen am Mehrfunktionentisch dienen können. Diese Fixierelemente 21 weisen auch einen Eingriffssteg 23 auf, der in die Fuge 17 eingreift, wie sich dies auch aus Fig. 4 ergibt.

Wie in Fig. 5 dargestellt, sind erfindungsgemäß Montageecken 6 bzw. 6a vorgesehen, die mit Eingriffsstegen 24 in die freien offenen Enden der jeweilig in den Ecken der zusammenlaufenden Profile 10 eingreifen können. Diese Montageecken sind auch mit einstückig angeformten Durchtrittshülsen 25 ausgestattet, in die Fixier- und Gewindezapfen 26 in den freien Enden der jeweilig zu montierenden Tischbeine 3 bzw. 3a vorgesehen sind, greifen können, derart, dass bei der Montage und nach Einsetzen des in Aufsicht trapezförmigen. Fixierklammern 8 Fixierschrauben 9 in diese Gewindehülsen 26 eingreifen können. Bei Anziehen der Spannschraube 9 werden die an den Fixierklammern 8 vorgesehenen Eingriffslaschen 27 in die Schlitzreihen 18 eingepresst und verspannen damit das jeweilige Tischbein 3 gegen die Montageecke 6 und diese wiederum an den jeweiligen, die Traversen bildenden Hohlprofilen 10.

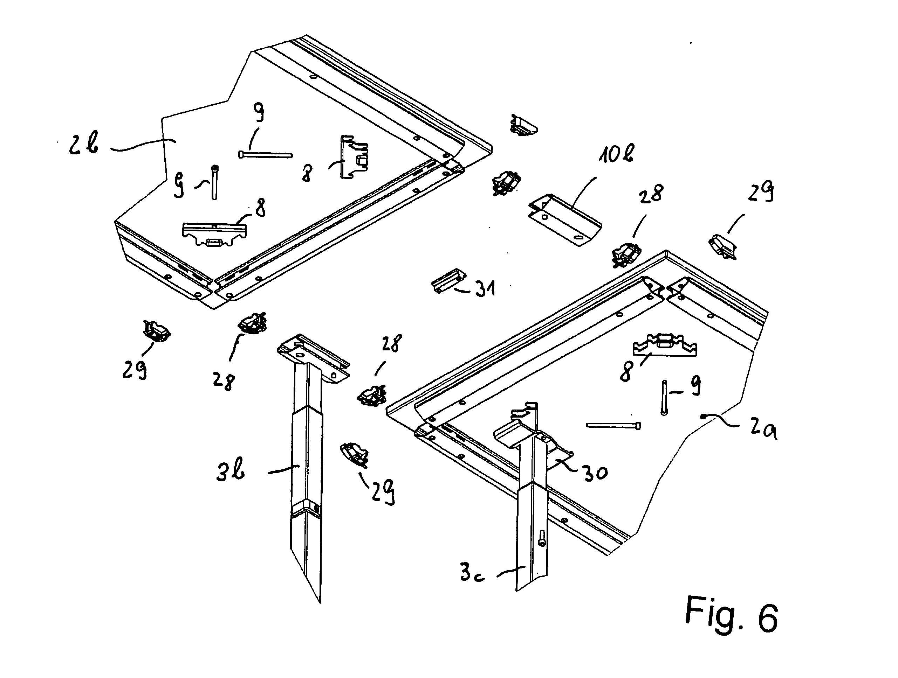

In den Fig. 6 bis 8 ist als Beispiel eine Situation dargestellt, in der zwei Tischplatten 2a und 2b zu einer Tischvergrößerung zusammengefügt werden. Die mit den vorbeschriebenen Elementen identischen Teile tragen das gleiche Bezugszeichen, so beispielsweise die Fixierklammern 8 mit der jeweiligen Montageschraube 9. Zum Unterschied der Ausführungsform des Tisches gemäß Fig. 1 und 2 trägt hier eines der zu montierenden Tischbeine 3b im Kopfbereich eine Art Kurzprofil 10a, das über Kupplungskappen 28 bzw. Fixierkappen 29 über den jeweiligen freien Enden der Längs- bzw. Querprofile einsteckbar sind, befestigbar ist. Wird eine Seite des Tisches nicht mit einem entsprechenden Tischbein im Tischplattenfugenbereich versehen, ist ein weiteres Kurzprofil 10b vorgesehen, wie sich dies aus Fig. 6 ergibt.

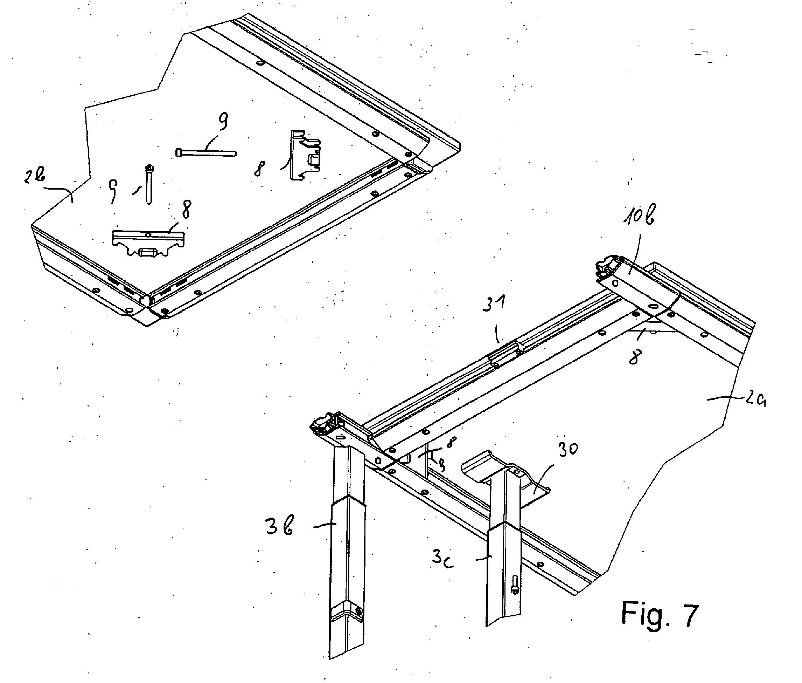

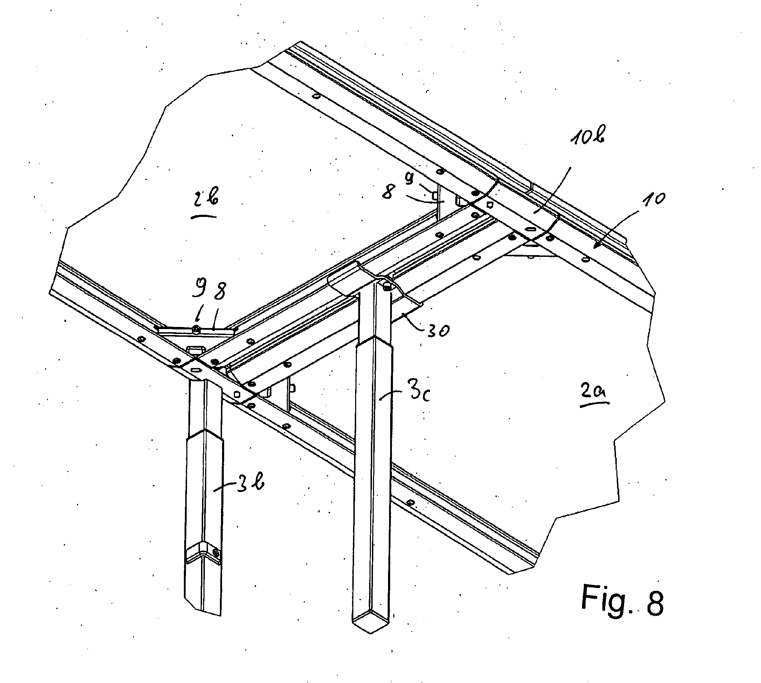

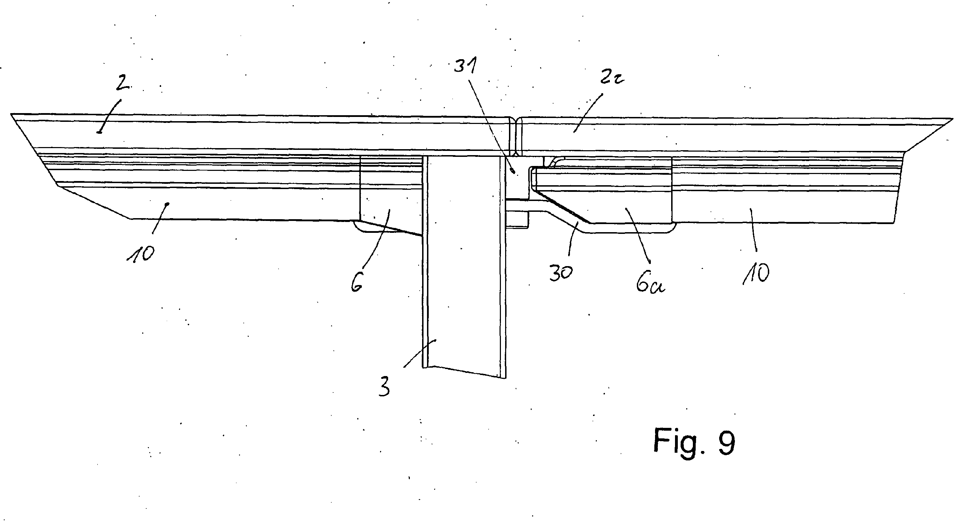

Aus dieser Figur ergibt sich auch, dass an den Quertraversen auch ein Tischbein, mit 3c bezeichnet, befestigbar ist, dessen Kopf mit einem Tragprofilblech 30 ausgerüstet ist, das die Quertraversen übergreifen kann, wie sich dies aus den Fig. 7 bzw. 8 ergibt. Dabei kann ein Montageblock 31 vorgesehen sein, der mit seinen Stegen in die Schattenfuge 17 unter der Tischplatte greifen kann und so zur Fixierung herangezogen wird. Das Profilblech 30 ohne Tischbein 3c in Verbindung mit dem Montageblock 31 kann auch zur Verbindung zweier Tischplatten dienen (Fig. 9), wobei eine Tischplatte 2c mit Eckwinkeln 6a ohne Beinaufnahmen versehen ist.

Natürlich ist das beschriebene Ausführungsbeispiel der Erfindung noch in vielfacher Hinsicht abzuändern, ohne den Grundgedanken zu verlassen. Mit der Erfindung können unterschiedliche Tischkonfigurationen erzeugt werden, ob rechtwinklig zueinander z.B. im Winkel von 120°, wenn die Montageecken 6 entsprechend gestaltet sind. Es können Tischaufbauten an den Profilen befestigt werden ebenso wie Halterungen oder Ständer für Computer, Drucker oder dgl..

In Fig. 1 ist gestrichelt angedeutet, dass die Tischplatte 2 mit randseitigen Einbuchtungen 32 versehen sein kann, so dass bei zwei aneinander anstoßenden entsprechend gestalteten Tischplatten eine Durchtrittsöffnung entsteht, um z.B. Träger für ein Sichtschutzelement hindurchtreten zu lassen.

## Patentansprüche

1. Bausatz zur Erzeugung eines Mehrfunktionen-Schreib- oder -Arbeitstisches, wobei der Bausatz, eine Tischplatte, randseitig unter der Tischplatte befestigbare Quer- und Längstraversen sowie an den stirnseitigen Enden der Traversen über Montageecken befestigbare Tischbeinen enthält,
**dadurch gekennzeichnet,**
**dass** die Traversen als Hohlprofile (10) ausgebildet sind mit einer ersten Profilfläche (11) zur Fixierung an der Unterseite der Tischplatte (2), einer zweiten dazu etwas senkrecht verlaufenden kürzeren Profilfläche (12), die in eine dritte zur ersten Profilfläche (11) parallelen kürzeren Profilfläche (13) übergeht, einer vierten im stumpfen Winkel davon abgehenden Schrägfläche (14), die in eine fünfte kurze, zur zweiten Profilfläche (12) parallelen Profilfläche (15) mündet, die ihrerseits in die erste Profilfläche (11) mündet.

2. Bausatz nach Anspruch 1,
**dadurch gekennzeichnet,**
**dass** der Übergang der fünften Profilfläche (15) zur ersten Profilfläche (11) als rückgekröpfte Winkelfläche (16) ausgebildet ist.

3. Bausatz nach Anspruch 1 und 2,
**dadurch gekennzeichnet,**
**dass** die zweite Profilfläche (12) unter Bildung parallel zur ersten und dritten Fläche ausgerichteten Umkröpfungen (12a,12b) in das Profilinnere zurückversetzt ausgebildet ist.

4. Bausatz nach einem der vorangehenden Ansprüche,
**dadurch gekennzeichnet,**
**dass** die rückgekröpfte Profilfläche (12) wenigstens teilweise mit Schlitzen (18) insbesondere mit zwei parallelen Reihen von Schlitzen (18) zum Eingriff von Montagestegen (27) von Zusatzelementen ausgerüstet ist.

5. Bausatz nach einem der vorangehenden Ansprüche,
**dadurch gekennzeichnet,**
**dass** die parallel zur Tischfläche (2) ausgerichtete erste und dazu parallele dritte Profilfläche (11,13) wenigstens bereichsweise mit Durchtrittsöffnungen (19, 20) ausgerüstet ist.

6. Bausatz nach einem der vorangehenden Ansprüche,
**gekennzeichnet durch**
Montageecken (6) für die Tischbeine (3) mit Eingriffsstutzen (24) in das Innere der die Quer- und Längstraversen bildenden Profile (10) an deren freien Enden ausgerüstet sind.

7. Bausatz nach einem der vorangehenden Ansprüche,
**gekennzeichnet durch**
eine querschnittlich U-förmige, in Aufsicht etwa trapezförmige Fixierklammer (8) zum Zusammenwirken mit dem Montageecken (6) insbesondere zum Durchtritt einer Montageschraube (9) od. dgl. zur Fixierung eines Tischbeines (3) nach Durchtritt **durch** die Montageeckwinkel (6).

8. Bausatz nach einem der vorangehenden Ansprüche,
**dadurch gekennzeichnet,**
**dass** der querschnittlich etwa U-förmige Fixierklammer (8) mit der Durchtrittsbohrung im U-Steg für die Montageschraube (9) mit nach außen weisenden Eingriffslaschen (27) an den Rändern der U-Schenkel zum Eingriff in die Ausnehmungen (18) in der zweiten rückgekröpften Profilfläche (12) ausgerüstet ist.

## Claims

1. A kit for producing a multi-function writing or work desk, wherein the kit includes a desk top, transverse and longitudinal bars which can be fixed at the edge under the desk top and desk legs which can be fixed to the front ends of the bars by way of mounting corner members,
**characterised in that**
the bars are in the form of hollow profiles (10) having a first profile surface (11) for fixing to the underside of the desk top (2), a second shorter profile surface (12) which extends approximately perpendicularly thereto and which goes into a third shorter profile surface (13) parallel to the first profile surface (11), and a fourth inclined surface (14) which extends therefrom at an obtuse angle and which opens into a fifth short profile surface (15) which is parallel to the second profile surface (12) and which in turn opens into the first profile surface (11).

2. A kit according to claim 1 **characterised in that** the transition of the fifth profile surface (15) to the first profile surface (11) is in the form of a set-back angled surface (16).

3. A kit according to claim 1 or claim 2 **characterised in that** the second profile surface (12) is of a configuration set back into the interior of the profile with the formation of bent-over portions (12a, 12b) directed parallel to the first and third surfaces.

4. A kit according to one of the preceding claims **characterised in that** the set-back profile surface (12) is at least partially provided with slots (18), in particular with two parallel rows of slots (18), for the engagement of mounting legs (27) of additional elements.

5. A kit according to one of the preceding claims **characterised in that** the first profile surface (11) oriented parallel to the desk top (2) and the third profile surface (13) parallel thereto is at least region-wise provided with through openings (19, 20).

6. A kit according to one of the preceding claims **characterised by** mounting corner members (6) for the desk legs (3) provided with engagement supports (24) into the interior of the profiles (10) forming the transverse and longitudinal bars at the free ends thereof.

7. A kit according to one of the preceding claims **characterised by** a fixing clamp (8) which is U-shaped in cross-section and approximately trapezoidal in plan view for co-operation with the mounting corner member (6), in particular for the passage of a mounting screw (9) or the like for fixing a desk leg (3) after passing through the mounting corner members (6).

8. A kit according to one of the preceding claims **characterised in that** the fixing clamp (8) which is approximately U-shaped in cross-section and which has the through bore in the web of the U-shape for the mounting screw (9) is provided with outwardly facing engagement plate portions (27) at the edges of the limbs of the U-shape for engagement into the recesses (18) in the second set-back profile surface (12).

## Revendications

1. Kit de construction pour produire une table multifonctionnelle d'écriture ou de travail, ledit kit de construction contenant un plateau de table, susceptible d'être fixé du côté de la bordure au-dessous du plateau de table, des traverses transversales et des traverses longitudinales ainsi que des pieds de table susceptibles d'être fixés aux extrémités frontales des traverses au moyen de coins de montage,
**caractérisé en ce que**
les traverses sont réalisées sous forme de profilés creux (10) avec une première surface de profilé (11) pour la fixation contre la face inférieure du plateau de table (2), une seconde surface de profilé (12) plus courte s'étendant approximativement perpendiculairement à celle-ci, qui se transforme en une troisième surface de profilé (13) plus courte parallèle à la première surface de profilé (11), une quatrième surface oblique (14) qui part de celle-ci sous un angle obtus et qui débouche dans une cinquième surface de profilé (15) courte parallèle à la seconde surface de profilé (12), ladite cinquième surface de profilé débouchant de son côté dans la première surface de profilé (11).

2. Kit de construction selon la revendication 1,
**caractérisé en ce que** la transition de la cinquième surface de profilé (15) vers la première surface de profilé (11) est réalisée sous la forme d'une surface angulaire (16) avec coudage rétrograde.

3. Kit de construction selon la revendication 1 et 2,
**caractérisé en ce que** la seconde surface de profilé (12) est réalisée en retrait vers l'intérieur du profilé en formant des coudages (12a, 12b) orientés parallèlement à la première et à la troisième surface.

4. Kit de construction selon l'une des revendications précédentes,
**caractérisé en ce que** la surface de profilé (12) avec coudage rétrograde est pourvue au moins partiellement de fentes (18), en particulier de deux rangées parallèles de fentes (18), pour l'engagement de barrettes de montage (27) d'éléments additionnels.

5. Kit de construction selon l'une des revendications précédentes,
**caractérisé en ce que** la première surface de profilé (11) orientée parallèlement à la surface de la table (2) et la troisième surface de profilé (13) parallèle à la première, sont pourvues au moins localement d'ouvertures traversantes (19, 20).

6. Kit de construction selon l'une des revendications précédentes,
**caractérisé par** des coins de montage (6) pour les pieds de table (3), qui sont pourvus à leurs extrémités libres de moignons d'engagement (24) pénétrant à l'intérieur des profilés (10) formant les traverses transversales et longitudinales.

7. Kit de construction selon l'une des revendications précédentes,
**caractérisé par** une pince de fixation (8) à section transversale en forme de U et de forme approximativement trapézoïdale en élévation, destinée à coopérer avec les coins de montage (6), en particulier pour la traversée d'une vis de montage (9) ou similaire pour la fixation d'un pied de table (3) après passage à travers les coins de montage (6).

8. Kit de construction selon l'une des revendications précédentes,
**caractérisé en ce que** le coin de montage (8) à section transversale sensiblement en forme de U est pourvu du perçage traversant dans le fond du U pour la vis de montage (9) avec des pattes d'engagement (27) dirigées vers l'extérieur au niveau des bordures des branches du U, pour l'engagement dans les évidements (18) de la seconde surface de profilé (12) à coudage rétrograde.
